Europäisches Patentamt

European Patent Office

Office européen des brevets

(11) Veröffentlichungsnummer: **0 332 097**
**A2**

## (12) EUROPÄISCHE PATENTANMELDUNG

(21) Anmeldenummer: 89103848.1

(22) Anmeldetag: 04.03.89

(51) Int. Cl.⁴: **H04L 11/16**

(30) Priorität: 07.03.88 DE 3807418

(43) Veröffentlichungstag der Anmeldung:
**13.09.89 Patentblatt 89/37**

(84) Benannte Vertragsstaaten:
**DE ES FR GB IT SE**

(71) Anmelder: **Bayerische Motoren Werke Aktiengesellschaft Patentabteilung AJ-3 Postfach 400240 Petuelring 130 D-8000 München 40(DE)**

(72) Erfinder: **Witzgall, Günther Platanenstrasse 27 D-8028 Taufkirchen(DE)**

(54) **Datenbus für Kraftfahrzeuge.**

(57) Bei einem Multiplex-Datenbus für Kraftfahrzeuge zum Verbinden mehrerer Stationen, der zwei elektrische Bus-Leitungen aufweist, unterscheiden sich die beiden Leitungen potentialmäßig für beide Zustände zumindest annähernd um denselben Betrag bei umgekehrt potentialmäßiger Wertigkeit der beiden Leitungen für die beiden Zustände. Damit ergeben sich für beide Zustände symmetrische Verhältnisse bezüglich des jeweiligen Potential-Mittelwerts. Daraus resultiert ein hohes Maß an Störsicherheit und Unempfindlichkeit auch bei nicht abgeschirmten Bus-Leitungen.

FIG. 1

EP 0 332 097 A2

Die Erfindung bezieht sich auf einen Datenbus für Kraftfahrzeuge nach dem Oberbegriff des Patentanspruchs 1.

Ein derartiger Datenbus dient dazu, mehrere Stationen zu einer funktionsfähigen Gesamtheit zusammenzuschließen. Der Aufbau des Datenbus kann auf verschiedene Weise erfolgen. So ist es beispielsweise bekannt, einen Master-Slave-Betrieb (vgl. JP-58-70658 A) mit einer Zentrale (Master) und mehreren untergeordneten Stationen (Slaves) einzurichten. Ferner gibt es Datenbus-Architekturen, bei denen die Stationen gleichberechtigt auf den Datenbus zugreifen und dieser Zugriff hierarchisch oder sequentiell geordnet ist.

Unabhängig von der jeweiligen Architektur des Datenbusses besteht jedoch bei der speziellen Anwendung eines Kraftfahrzeugs ein wesentliches Problem hinsichtlich der Störsicherheit. Aufgrund der engen Einbauverhältnisse und unterschiedlichster interner und externer Störquellen in Form einer getakteten Hochspannung für die Zündanlage oder externen HF-Sendern sind diese Einflüsse nicht vorhersehbar und lassen sich mit konventionellen Mitteln, z. B. mit Hilfe einer Abschirmung nicht ausreichend eliminieren. Andererseits ist aber für wesentliche Teile des Kraftfahrzeugs, beispielsweise Sicherheitseinrichtungen in Form von Airbag oder des Antiblockiersystems die Störsicherheit unbedingt notwendig.

Der Erfindung liegt die Aufgabe zugrunde, einen Datenbus der eingangs genannten Art zu schaffen, der mit geringem konstruktiven und schaltungstechnischem Aufwand ein hohes Maß an Störsicherheit liefert. Die Erfindung löst diese Aufgabe durch die kennzeichnenden Merkmale des Patentanspruchs 1.

Wesentlich an der Erfindung ist, daß für beide Zustände die Leitungen potentialmäßig in definierter und voneinander unterschiedlicher Weise belegt sind. Durch die Gleichheit des Potentialabstands können Störeinflüsse bei beiden Zuständen erkannt und durch geeignete Maßnahmen, beispielsweise kurzzeitige Unterbrechung der Kommunikation, eliminiert werden. Gleichzeitig ist aber auch bei Vorliegen von Störungen ein eindeutiges Erkennen der beiden Zustände möglich. Der erfindungsgemäße Zweileitungs-Bus erfordert keinerlei Abschirmmaßnahmen, da die potentialmäßige Belegung der beiden Leitungen einen redundanten Charakter besitzt.

Die Realisierung der Erfindung ist auf verschiedene Weise möglich. So kann eine der beiden Leitungen stets auf demselben Potential gehalten werden und die Potentialdifferenz für die beiden Zustände durch entsprechendes Anheben und Absenken des Potentials der anderen Leitung um jeweils denselben Betrag erzeugt werden. Demgegenüber besitzt die im Patentanspruch 2 angegebene Ausführungsform den Vorteil, daß die beiden Zustände allein durch potentialmäßiges Umschalten zwischen den beiden Leitungen erzeugt werden. Dadurch teilt sich auch die zwischen den beiden Zuständen bestehende bzw. zu erzeugende Potentialdifferenz auf, da beide Zustände auf dasselbe mittlere Niveau bezogen sind. Die sich daraus ergebende Symmetrie zeichnet sich durch ein hohes Maß an Störunempfindlichkeit aus.

Der Mittelwert der beiden Potentiale kann gleich Null oder besser ungleich Null sein. Letzteres erhöht die Störunempfindlichkeit weiter, da Störungen, bezogen auf einen derartigen, von Null verschiedenen Nutzpegel -gegeben durch die Potentiale der beiden Zustände -verhältnismäßig umso geringer ist, je höher der Nutzpegel ist.

Eine weitere Verbesserung demgegenüber ergibt sich, wenn die beiden Potentiale dasselbe Vorzeichen besitzen. Damit ist der Mittelwert der beiden Potentiale größer als das kleinere der beiden Potentiale und besitzt ebenfalls dasselbe Vorzeichen.

Schaltungstechnische Realisierungen der Erfindung sind auf verschiedene Weise möglich. Vorzugsweise dienen hierzu konstante bzw. gesteuerte Strom- und Spannungsquellen, wie sie für Datenbusse allgemein bekannt sind. Ein Beispiel hierfür findet sich in der EP 222630-A, in der der gleichzeitige Austausch von Informationen zwischen zwei Stationen hin und zurück über dieselbe Leitung beschrieben ist. Konkret ergeben sich vorteilhafte Realisierungen der vorliegenden Erfindung mit Hilfe der Merkmale, die in den Patentansprüchen 6 und 7 aufgeführt sind.

In der Zeichnung ist ein Ausführungsbeispiel der Erfindung dargestellt.

Es zeigt

Fig. 1 den prinzipiellen Aufbau einer Schaltungs anordnung in einem Kraftfahrzeug mit einem Multiplex-Datenbus

Fig. 2 ein Detail aus Fig. 1 in vergrößerter Darstellung

Fig. 3 mit den Teilen a bis c die potentialmäßige Belegung der wesentlichen vorgesehenen elektrischen Leitungen.

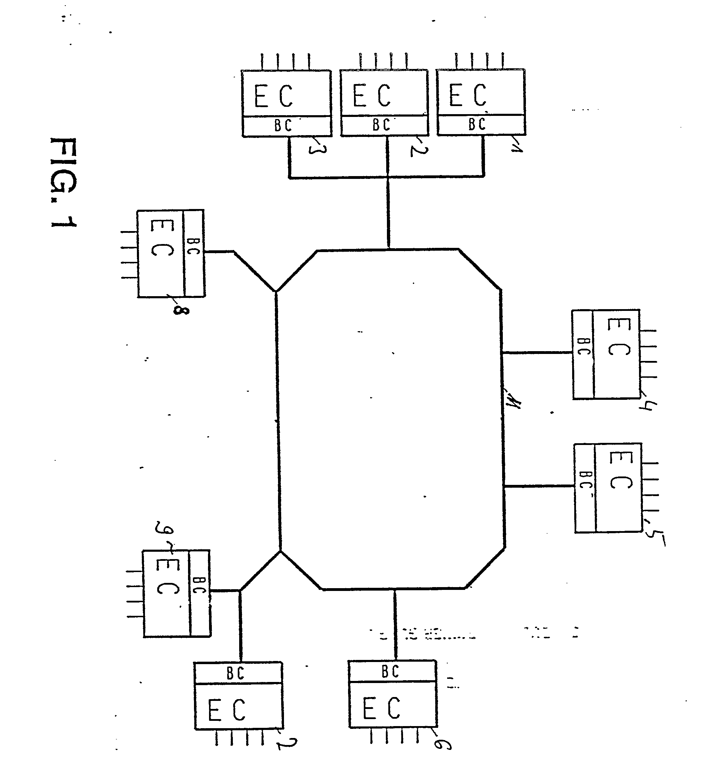

Die Schaltungsanordnung von Fig. 1 enthält schematisch eine Reihe von Stationen 1 bis 9, die untereinander durch einen Datenbus 11 verbunden sind und in einem Multiplexbetrieb miteinander kommunizieren. Jede der Stationen 1 bis 9 besteht aus zwei in gleicher Weise aufgebauten Teilen, die mit BC und EC bezeichnet sind. Bei BC handelt es sich im wesentlichen um jeweils einen Sender und einen Empfänger, während EC zugeordnete elektronische Steuereinheiten darstellen, die die Verbindung zu nicht dargestellten Teilnehmern herstellen. Bei diesen Teilnehmern handelt es sich beispielsweise um elektronische Steuer-/Regelgeräte für die Brennkraftmaschine, das Getriebe, die Aufhängung usw., ferner um Sensoren, Stellglieder oder elektrische Verbraucher.

Jede der Stationen 1 bis 9 nimmt in definierter Weise am Datenverkehr über den Datenbus teil. Dabei kann es sich um einen zentralen oder einen dezentralen Aufbau handeln. Beim zentralen Aufbau ist eine der Stationen fest als übergeordneter Master tätig und steuert den Zugang der anderen Stationen. Bei dezentralem Aufbau kann die Master-Eigenschaft in vorgegebener Weise, beispielsweise sequentiell oder nach dem Dateninhalt wechseln.

Der Datenbus 11 besteht aus zwei elektrischen Leitungen (im folgenden mit A und B bezeichnet), die verdrillt miteinander verbunden (twisted pair), jedoch ohne besondere Abschirmmaßnahmen innerhalb des Kraftfahrzeugs zwischen den Stationen 1 bis 9 verlegt sind. Diese Leitungen sind am Teil BC der Stationen angeschlossen.

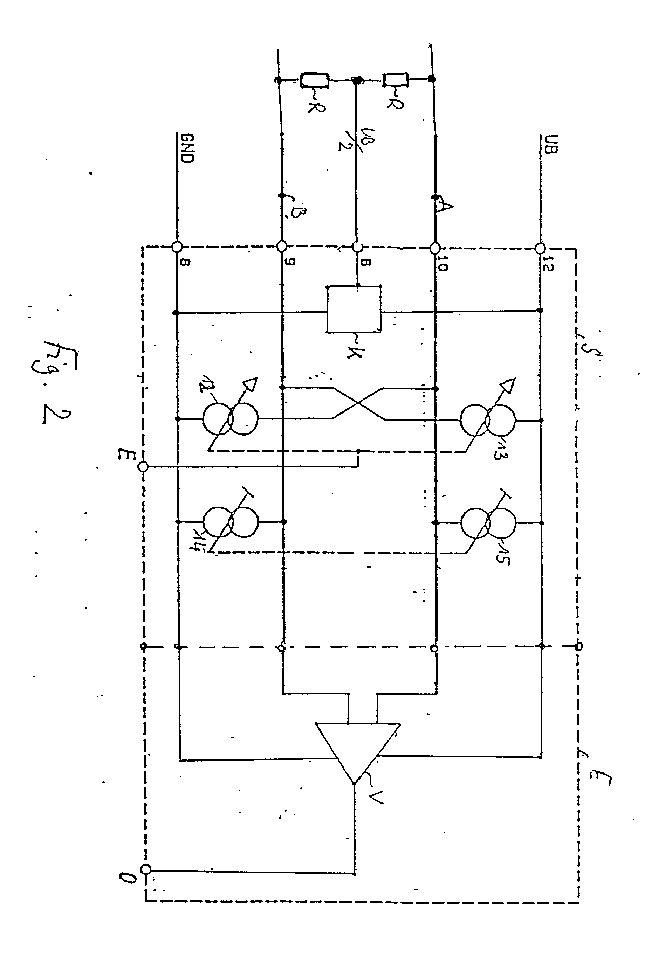

Der Aufbau der Teile BC der Stationen 1 bis 9 ist in Fig. 2 im einzelnen gezeigt. Jeder Teil BC besteht aus einem Sender S und einem Empfänger E. Der Empfänger -symbolisiert als Verstärker V - ist in üblicher Weise aufgebaut und dient dazu, die über die Leitungen A und B eingehende Eingangsinformation in ein übliches binäres Signal am Ausgang O umzusetzen. Der Sender S besteht erfindungsgemäß aus jeweils einer gesteuerten Stromquelle 12 bzw. 13 für jede der Leitungen A und B sowie jeweils einer statischen Stromquelle 14 bzw. 15, ebenfalls für die Leitungen A und B. Die gesteuerten Stromquellen 12 und 13 sind in der dargestellten Weise zwischen dem Potential UB einer nicht dargestellten Betriebsspannungsquelle und dem Massepotential GND geschaltet und gemeinsam über eine Sendereingangsleitung E gesteuert. Diese Steuerung ist dann, wenn die Information über den logischen Zustand "0" auf den Datenbus (Leitungen A und B) gegeben werden soll, aktiv. Die beiden Stromquellen 12 und 13 geben denselben Strom von z.B. 66 mA ab und sind beim logischen Zustand "1" inaktiv. Dabei arbeitet die Stromquelle 12 gegen Masse GND und die Stromquelle 13 gegen UB.

Die statischen Stromquellen 14 und 15 sind in der dargestellten Weise zwischen Massepotential GND und der Leitung B bzw. zwischen UB und der Leitung A geschaltet und liefern beide während der gesamten Betriebszeit einen konstanten Strom von hier 33 mA für jede der Leitungen A und B. Dieser Strom ist genau die Hälfte des mit Hilfe der steuerbaren Stromquellen 12 bzw. 13 erzeugten Stromes. Die beiden Stromquellen 12 und 15 bzw. 13 und 14 der beiden Busleitungen A bzw. B arbeiten somit entgegengesetzt. In Abhängigkeit vom Schaltzustand der gesteuerten Stromquellen 12 bzw. 13 resultiert daraus ein Stromfluß von 33 mA in positiver bzw. negativer Richtung. Jede der beiden Busleitungen A und B befindet sich bei eingeschaltetem Sender S auf einem Potential, das zwischen der Betriebsspannung UB und dem Massepotential liegt.

Die resultierenden Ströme auf den Leitungen A und B ergeben zusammen mit der Summe von Leitungsabschlußwiderständen R eine Signalamplitude, die durch die Potentialdifferenz der Potentiale auf den Leitungen A und B bestimmt ist und die sich beispielsweise auf einen Wert einstellen läßt, der ein Drittel der Betriebsspannung UB ist.

Der Mittelwert der beiden Potentiale läßt sich ebenfalls durch geeignete Beschaltung, beispielsweise mit Hilfe einer Konstant-Spannungsquelle K auf den halben Wert der Betriebsspannung UB einstellen. Die Potentiale der beiden Leitungen A und B betragen dann 1/3 bzw. 2/3 der Betriebsspannung UB. Ihre absolute Größe (bei UB = 12V) ergibt sich für die Potentiale zu 4V bzw. 8V und hängt vom Zustand ab, der am Eingangsanschluß E vorliegt.

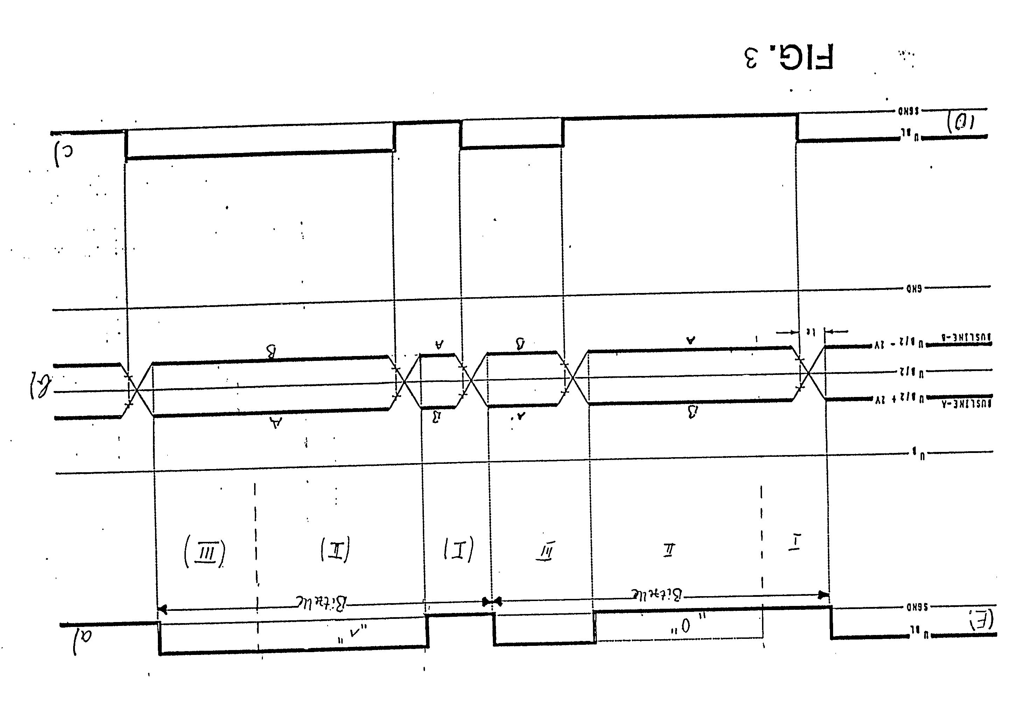

Dies ist in Fig. 3 näher gezeigt. Dabei ist mit a) bzw. c) je ein Diagramm wiedergegeben, das die Potentialverhältnisse am Sendeeingang E bzw. am Empfängerausgang O des Teils BC (Fig. 2) zeigt. Das Diagramm von b) zeigt die zugehörige Potentialbelegung auf den Leitungen A und B.

Über die Busleitungen A bzw. B soll eine Information in Form eines Bits übertragen werden, das für die beiden Zustände innerhalb einer - zeitlich gesehen - Bitzelle der Information 0 bzw. 1 entspricht. Jede der Bitzellen besteht aus drei zeitlichen Abschnitten I bis III, von denen der Abschnitt I eine Taktinformation enthält und durch eine abfallende Flanke an seinem Anfang und durch Massepotential charakterisiert ist.

Im Abschnitt II steht die eigentliche Information, die für den Zustand "0" durch Massepotential und den Zustand "1" durch ein davon verschiedenes Potential $U_{BL}$ charakterisiert ist.

Die Abschnitte III der beiden Bitzellen sind gleich und durch das Potential $U_{BL}$ sowie für die Information "0" durch einen Anstieg auf dieses Potential zu Beginn des Abschnitts III charakterisiert.

Die in beiden Bitzellen (I-III bzw. I'-III') enthaltene Information wird in der Weise auf die Sendereingangsleitung E und über den Sender S auf die Busleitungen A und B gegeben, wie sie im Teil b von Fig. 3 gezeigt ist.

Ausgehend von dem Potential der Leitung A, das zwischen dem halben und dem ganzen Wert der Betriebsspannung liegt bzw. für die Leitung B zwischen der halben Betriebsspannung und dem Massepotential liegt, ergibt sich durch die Abfallflanke zu Beginn des Abschnitts I eine Umkehrung der Potentiale auf den beiden Leitungen A und B, die - durch nicht dargestellte Einrichtungen zum gleitenden Schalten der Stromquellen 12 und 13 beeinflußt - mit definierter Änderungsrate zu einer Umkehrung der Potentiale auf den beiden Leitungen A und B führt.

Das von Null verschiedene Potential $U_{BL}$ zu Beginn des Abschnitts III am Sendeeingang E ergibt erneut eine Umkehrung der Potentiale auf den Leitungen A und B, die zu denselben Potentialverhältnissen wie unmittelbar vor Beginn der Bitzelle führt. Weiter folgende Anstiege bzw. Abfälle des Potentials auf dem Sendereingang E ergeben die Potentialverläufe auf den Leitungen A und B, wie sie dargestellt sind.

Deutlich ist zu erkennen, daß die beiden Potentiale der Leitungen A und B symmetrisch bezüglich des halben Werts der Betriebsspannung sind und von dieser Symmetrielinie aus jeweils denselben Abstand besitzen. Damit wird es möglich, eine höhe Störsicherheit der Anordnung zu erreichen, die insbesondere für den Einsatzfall von Kraftfahrzeugen notwendig und durch die erfindungsgemäßen Mittel mit geringem schaltungstechnischen Aufwand erzielbar ist.

Schließlich zeigt Teil c von Fig. 3 den Potentialverlauf am Empfängerausgang O (Fig. 2). Dieser Spannungsverlauf ist im wesentlichen identisch mit dem am Sendereingang E und gegenüber diesem lediglich um eine kurze Totzeit $t_e$ versetzt. Diese Totzeit $t_e$ resultiert aus der endlichen Flankensteilheit beim Übergang der beiden Leitungen A und B zwischen den beiden Potentialzuständen sowie der Ansprechschwelle für die Änderung der potentialmäßigen Belegung der Leitungen A und B. Die Ansprechschwelle ist in etwa gleich dem Mittelwert zwischen den Potentialen der Leitungen A und B außerhalb des Übergangsbereichs und dem Mittelwert zwischen den beiden Potentialen (= UB/2). Durch diese definierten Ansprechschwellen wird eine weitere Erhöhung der Störsicherheit bzw. durch die gegebene Hysterese eine starke Rauschunterdrückung erzielt.

Ferner sei erwähnt, daß es möglich ist, die jeder Station zugeordneten Konstant-Stromquellen (hier 14 und 15) entsprechend der Zahl der Teilnehmer einzustellen. Dadurch wird unabhängig von der Teilnehmerzahl stets dasselbe Potential auf den beiden Leitungen A und B erreicht.

**Ansprüche**

1. Datenbus für Kraftfahrzeuge zum Verbinden mehrerer Stationen, der zwei elektrische Leitungen aufweist, deren potentialmäßige Belegung sich für die beiden Signal-Zustände unterscheidet, gekennzeichnet durch die Kombination folgender Merkmale:

- die beiden Leitungen (A, B) unterscheiden sich potentialmäßig für die beiden Zustände um zumindest annähernd dieselbe Differenz und
- die potentialmäßige Wertigkeit der beiden Leitungen ist für die beiden Zustände umgekehrt.

2. Datenbus nach Anspruch 1, dadurch gekennzeichnet, daß die potentialmäßige Belegung der beiden Leitungen (A, B) für die beiden Zustände vertauscht ist.

3. Datenbus nach Anspruch 2, dadurch gekennzeichnet, daß der Mittelwert (UB/2) der beiden Potentiale ungleich Null ist.

4. Datenbus nach Anspruch 2 oder 3, dadurch gekennzeichnet, daß beide Potentiale dasselbe Vorzeichen besitzen.

5. Datenbus nach einem der Ansprüche 2 bis 4, dadurch gekennzeichnet, daß der Mittelwert der beiden Potentiale durch eine Konstant-Spannungsquelle (K) eingestellt ist.

6. Datenbus nach Anspruch 5, dadurch gekennzeichnet, daß die beiden Potentiale für den einen Zustand durch Konstant-Stromquellen (14, 15) eingestellt sind.

7. Datenbus nach Anspruch 6, dadurch gekennzeichnet, daß die bezüglich des Mittelwerts reziproken Potentiale durch gesteuerte und gleichgetaktete Stromquellen (12, 13) erzeugt sind.

FIG. 1

Fig. 2